# EUROPEAN PATENT APPLICATION

(11) **EP 4 715 319 A1**
(43) Date of publication of application: **25.03.2026**
(21) Application number: 24842089.5
(22) Date of filing: 06.06.2024
(51) Int. Cl.: G01B 7/06, G01M 17/04

(54) **MEASUREMENT APPARATUS AND MEASUREMENT METHOD**

(30) Priority: 18.07.2023 CN 202310882479
(71) Applicant: Shenzhen Yinwang Intelligent Technologies Co., Ltd., Shenzhen, Guangdong 518110 (CN)
(72) Inventor: ZHOU, Dawei, Shenzhen, Guangdong 518129 (CN)
(74) Representative: Maiwald GmbH
(86) International application number: PCT/CN2024/097788
(87) International publication number: WO 2025/016089

(57) **Abstract**

Embodiments of this application provide a measurement apparatus and a measurement method. The measurement apparatus is configured to measure a height of a suspension system. The suspension system includes a swing arm disposed between a bearing structure and a wheel of a vehicle, and a bushing disposed at a connection part between the swing arm and the bearing structure or the wheel. The bushing includes an inner ring of the bushing and an outer ring of the bushing. The measurement apparatus includes a sensing unit and a processing unit. The sensing unit is configured to obtain relative rotation information between the inner ring of the bushing and the outer ring of the bushing. The processing unit may be configured to determine, based on the relative rotation information, first indication information indicating the height of the suspension system. Embodiments of this application are applicable to a new energy vehicle such as an electric vehicle or a hybrid electric vehicle. When the measurement apparatus is used to measure a suspension height, there is no need to design a specific support for a vehicle type and a suspension arrangement manner. This can reduce adaptation work for the vehicle type and a suspension, and offers good universality for suspension height measurement.

## Description

This application claims priority to Chinese Patent Application No. 202310882479.5, filed with the China National Intellectual Property Administration on July 18, 2023 and entitled "MEASUREMENT APPARATUS AND MEASUREMENT METHOD", which is incorporated herein by reference in its entirety.

### TECHNICAL FIELD

Embodiments of this application relate to the field of mechanical and electronic technologies, and more specifically, to a measurement apparatus and a measurement method.

### BACKGROUND

With rapid development of a vehicle technology, air suspensions and active suspensions that can dynamically adjust rigidity and damping characteristics are increasingly used in vehicles. Compared with a conventional suspension, the air suspension and the active suspension can adjust a suspension height, reduce vibration of a vehicle body, and improve ride comfort of the vehicle. Whether the suspension height can be accurately detected directly affects performance of the air suspension and the active suspension, and further affects comprehensive performance of the vehicle. Due to poor universality of currently commonly used suspension height measurement apparatuses, to accurately detect the suspension height, complex adaptation work is usually needed for different vehicle types. Therefore, how to improve universality of the suspension height measurement apparatus becomes a problem to be resolved.

### SUMMARY

Embodiments of this application provide a measurement apparatus and a measurement method, which can be applied to a plurality of different vehicle types and suspension height measurement scenarios, and offer good universality for suspension height measurement.

According to a first aspect, a measurement apparatus is provided. The measurement apparatus is configured to measure a height of a suspension system disposed between a bearing structure and a wheel of a vehicle. The suspension system includes a vibration absorber, a swing arm, and a bushing. The swing arm is disposed between the bearing structure and the wheel, the vibration absorber is disposed between the swing arm and the bearing structure, the bushing is disposed at a connection part between the swing arm and the bearing structure and/or the wheel, and the bushing includes an inner ring of the bushing and an outer ring of the bushing. The measurement apparatus includes a sensing unit and a processing unit. The sensing unit is configured to obtain relative rotation information between the inner ring of the bushing and the outer ring of the bushing. The processing unit is configured to determine first indication information based on the relative rotation information, where the first indication information indicates the height of the suspension system.

When the vehicle uses a load-bearing vehicle body, the bearing structure of the vehicle is the load-bearing vehicle body. When the vehicle uses a non-load-bearing vehicle body, the bearing structure of the vehicle is a frame of the vehicle.

When the height of the suspension system changes, the swing arm moves relative to the wheel and/or the vehicle body. As a result, for the swing arm bushing, the inner ring of the bushing (briefly referred to as the inner ring) and the outer ring of the bushing (briefly referred to as the outer ring) rotate relative to each other. Because the measurement apparatus in this application determines the height of the suspension system based on the relative rotation information between the inner ring of the bushing and the outer ring of the bushing, when the measurement apparatus is used by the vehicle to measure the suspension height, there is no need to design a specific support for each vehicle type and suspension arrangement manner, so that related adaptation work can be reduced. This is reflected in good universality that the measurement apparatus offers for suspension height measurement, which facilitates implementation of modularization and platformization.

With reference to the first aspect, in some implementations of the first aspect, the sensing unit may include a magnetic field direction sensing unit disposed at a first position of a first part of the bushing, the magnetic field direction sensing unit may be configured to obtain change information of a magnetic field direction at the first position, the relative rotation information includes the change information of the magnetic field direction at the first position, and the first part of the bushing may be one of the inner ring of the bushing or the outer ring of the bushing.

In this application, the relative rotation information between the inner ring of the bushing and the outer ring of the bushing is obtained based on the change information of the magnetic field direction, so that an accurate measurement result of the suspension height can be obtained at low costs, and difficulty in manufacturing and assembling the suspension height measurement apparatus can be reduced.

With reference to the first aspect, in some implementations of the first aspect, a magnetic element is disposed on a second part of the bushing, the magnetic element may be configured to generate a magnetic field at the first position, and the second part of the bushing is the other one of the inner ring of the bushing or the outer ring of the bushing.

In an embodiment, the suspension height measurement apparatus may include the magnetic element. The magnetic element and the magnetic field direction sensing unit separately rotate with rotation of the inner ring and the outer ring of the swing arm bushing.

In another embodiment, the suspension height measurement apparatus may not include the magnetic element. For example, specifications and an arrangement manner of an adaptive magnetic element may be indicated in an instruction manual of the measurement apparatus, so that relative movement between the inner ring and the outer ring of the swing arm bushing can be determined based on a change in the magnetic field direction.

With reference to the first aspect, in some implementations of the first aspect, the magnetic field direction sensing unit and the magnetic element may be disposed opposite to each other in an axial direction of the bushing, and a magnetization direction of the magnetic element may be perpendicular to the axial direction of the bushing.

In this application, in the foregoing arrangement manner, the change information of the magnetic field direction can more accurately reflect rotation between the inner ring and the outer ring of the swing arm bushing, so that accuracy of the measurement result of the suspension height can be improved.

With reference to the first aspect, in some implementations of the first aspect, in the axial direction of the bushing, a projection area of the magnetic element is greater than a projection area of the magnetic field direction sensing unit, and a ratio of the projection area of the magnetic element to the projection area of the magnetic field direction sensing unit is greater than or equal to a first threshold.

In an embodiment, in the axial direction of the bushing, the projection area of the magnetic element is more than five times that of the magnetic field direction sensing unit. In some possible implementations, the first threshold may alternatively be another value such as 8 or 10.

In another embodiment, the first threshold may be determined based on magnetic field distribution on a plane that is perpendicular to an axis of the bushing and on which the magnetic field direction sensing unit is arranged. For example, on the plane, better uniformity of a magnetic field strength at an installation position of the magnetic field direction sensing unit and a magnetic field strength in a surrounding region of the installation position indicates that the first threshold may be a smaller value (for example, 5). When the uniformity of the magnetic field strength is poor, the first threshold may be a large value (for example, 8 or 9).

In this application, in the axial direction of the bushing, the projection area of the magnetic element is far greater than the projection area of the magnetic field direction sensing unit, so that measurement errors caused by factors such as an installation deviation and vibration can be reduced.

With reference to the first aspect, in some implementations of the first aspect, the measurement apparatus may further include a housing connected to the outer ring of the bushing, and the magnetic field direction sensing unit is fastened to the housing.

Because the magnetic field direction sensing unit is fastened to the housing connected to the outer ring of the bushing, the magnetic field direction sensing unit can move with movement of the outer ring of the swing arm bushing. Correspondingly, because the magnetic element is disposed on the inner ring of the bushing, the magnetic element can move with movement of the inner ring of the bushing. In this application, the housing that can adapt to a bushing in a common form is used, and the magnetic field direction sensing unit is disposed in the foregoing manner, which facilitates implementation of platformization and modularization of the suspension height measurement apparatus.

With reference to the first aspect, in some implementations of the first aspect, the sensing unit may include at least one pair of magnetic field direction sensing units disposed on a first end face of the first part of the bushing and evenly distributed in a circumferential direction.

In this application, the at least one pair of magnetic field direction sensing units is evenly disposed in the circumferential direction on an end face on any side of the outer ring of the bushing or the inner ring of the bushing, and two magnetic field direction sensing units included in a pair of magnetic field direction sensing units sense a change in the magnetic field direction, so that measurement errors caused by factors such as an installation deviation and vibration can be reduced.

With reference to the first aspect, in some implementations of the first aspect, the measurement apparatus may further include at least one pair of magnetic elements disposed on a first end face of a second part of the bushing and evenly distributed in a circumferential direction. The at least one pair of magnetic elements is in a one-to-one correspondence with the at least one pair of magnetic field direction sensing units, and the second part of the bushing is the other one of the inner ring of the bushing or the outer ring of the bushing.

For example, the first end face of the first part of the bushing and the first end face of the second part of the bushing are located on a same side of the bushing. For example, the first end face of the inner ring of the bushing faces the rear of the vehicle, and correspondingly, the first end face of the outer ring of the bushing also faces the rear of the vehicle.

In this application, the magnetic element pair corresponding to the magnetic field direction sensing unit pair is disposed, so that measurement errors caused by non-uniform magnetic field distribution can be reduced.

With reference to the first aspect, in some implementations of the first aspect, the at least one pair of magnetic field direction sensing units includes a first magnetic field direction sensing unit pair, and sensing directions of two magnetic field direction sensing units in the first magnetic field direction sensing unit pair are the same. The at least one pair of magnetic elements includes a first magnetic element pair, a first magnetic pole of a magnetic element in the first magnetic element pair points to an axis of the bushing, and an included angle between a magnetization direction of the magnetic element in the first magnetic element pair and the sensing direction of the magnetic field direction sensing unit in the first magnetic field direction sensing unit pair may be greater than or equal to a second threshold.

For example, the first magnetic field direction sensing unit pair is any pair of magnetic field direction sensing units. The two magnetic field direction sensing units in the first magnetic field direction sensing unit pair are distributed on two sides of the axis of the bushing and are disposed opposite to each other. For example, south poles (or north poles) of the two magnetic field direction sensing units point to the axial direction of the bushing.

For example, the second threshold may be 85°, 88°, or another value. For example, the magnetization direction of the magnetic element in the first magnetic element pair is perpendicular to the sensing direction of the magnetic field direction sensing unit in the first magnetic field direction sensing unit pair.

In an embodiment, the at least one pair of magnetic field direction sensing units may include a magnetic field direction sensing unit pair #1 and a magnetic field direction sensing unit pair #2, and correspondingly, the at least one pair of magnetic elements includes a magnetic element pair #1 and a second magnetic element pair #2. Sensing directions of magnetic field direction sensing units #1 and #2 in the magnetic field direction sensing unit pair #1 are the same, and the magnetic field direction sensing units #1 and #2 are evenly arranged in the circumferential direction. Sensing directions of magnetic field direction sensing units #3 and #4 in the magnetic field direction sensing unit pair #2 are the same, and the magnetic field direction sensing units #3 and #4 are evenly arranged in the circumferential direction. The magnetic field direction sensing unit and a second magnetic field direction sensing unit may not be evenly arranged in the circumferential direction. For example, the magnetic field direction sensing units #1, #2, #3, and #4 are disposed on a same circumference using the axis of the bushing as a reference, and an arc length between the magnetic field direction sensing units #1 and #3 may be less than an arc length between the magnetic field direction sensing units #2 and #3. Sensing directions of the magnetic field direction sensing units #1 and #3 may be both clockwise or counter-clockwise, or sensing directions of the magnetic field direction sensing units #1 and #3 may be opposite.

In an actual scenario, factors such as installation and vibration inevitably lead to eccentricity between a first magnetic field direction sensing unit and the first magnetic element pair. In this application, in the foregoing arrangement manner, errors caused by eccentricity resulted from installation and vibration can be reduced.

With reference to the first aspect, in some implementations of the first aspect, a difference between a first distance and a second distance is less than a third threshold, and the first distance and the second distance are respectively distances between the axis of the bushing and the two magnetic field direction sensing units in the first magnetic field direction sensing unit pair; and/or a difference between a third distance and a fourth distance is less than a fourth threshold, and the third distance and the fourth distance are respectively distances between the axis of the bushing and two magnetic elements in the first magnetic element pair.

In an embodiment, a magnetic field direction sensing unit and a magnetic field direction sensing unit corresponding to the magnetic field direction sensing unit are disposed on a same end face of the outer ring of the bushing, and are distributed on a same circumference using the axis of the bushing as a reference. Alternatively, the two magnetic field direction sensing units are not distributed on a same circumference, but a difference between radiuses of two circumferences on which the two magnetic field direction sensing units are respectively located is less than or equal to the third threshold (for example, 3 millimeters or 5 millimeters).

In another embodiment, the two magnetic elements in the first magnetic element pair are disposed on a same end face of the inner ring of the bushing, and are distributed on a same circumference using the axis of the bushing as a reference. Alternatively, the two magnetic elements are not distributed in a same circumference, but radiuses of two circumferences on which the two magnetic elements are respectively located are less than or equal to the fourth threshold (for example, 3 millimeters or 4 millimeters). The third threshold or the fourth threshold may alternatively be another value, for example, 6 millimeters. This is not limited in this application.

In this application, two magnetic elements in a same magnetic element pair are disposed on two circumferences with similar sizes, and/or two magnetic field direction sensing units in a same magnetic field direction sensing unit pair are disposed on two circumferences with similar sizes, so that interference, to the measurement result, caused by uneven distribution of magnetic field strengths in a relative rotation process of the inner ring and the outer ring of the bushing can be reduced.

With reference to the first aspect, in some implementations of the first aspect, the magnetic field direction sensing unit includes a magneto-resistance sensor or a plurality of magnetic induction coils.

In this application, the magneto-resistance sensor or the magnetic induction coil is used, so that the measurement apparatus can be implemented in a simple manner, and costs and design and manufacturing difficulty of the measurement apparatus can be reduced.

With reference to the first aspect, in some implementations of the first aspect, a magnetic field strength at the first position is greater than or equal to a fifth threshold.

For example, the magnetic field strength at the installation position of the magnetic field direction sensing unit may be greater than or equal to 28 millitesla or 30 millitesla. The fifth threshold may alternatively be another value, for example, 25 millitesla.

In this application, the magnetic field strength at the installation position of the magnetic field direction sensing unit is ensured, so that interference caused by an insufficient magnetic field strength to the measurement result can be reduced.

With reference to the first aspect, in some implementations of the first aspect, the sensing unit includes at least one strain sensing unit. The at least one strain sensing unit is disposed on an end face of vibration-absorbing rubber of the bushing and is configured to measure shape change information of the vibration-absorbing rubber. The vibration-absorbing rubber is disposed between the inner ring of the bushing and the outer ring of the bushing, and the relative rotation information between the inner ring of the bushing and the outer ring of the bushing includes the shape change information of the vibration-absorbing rubber.

When the inner ring and the outer ring of the suspension swing arm busing rotate relative to each other, the vibration-absorbing rubber between the inner ring and the outer ring of the bushing is deformed. In this application, the suspension height is determined based on deformation of the vibration-absorbing rubber, so that accurate suspension height information can be obtained at low costs, and manufacturing and assembling difficulty of the suspension height measurement apparatus can be reduced.

According to a second aspect, a measurement method is provided. The method is used to measure a height of a suspension system disposed between a bearing structure and a wheel of a vehicle. The suspension system includes a vibration absorber, a swing arm, and a bushing. The swing arm is disposed between the bearing structure and the wheel, the vibration absorber is disposed between the swing arm and the bearing structure, the bushing is disposed at a connection part between the swing arm and the bearing structure and/or the wheel, and the bushing includes an inner ring of the bushing and an outer ring of the bushing. The measurement method includes: obtaining relative rotation information between the inner ring of the bushing and the outer ring of the bushing; and determining first indication information based on the relative rotation information, where the first indication information indicates the height of the suspension system.

With reference to the second aspect, in some implementations of the second aspect, obtaining the relative rotation information between the inner ring of the bushing and the outer ring of the bushing may include: A magnetic field direction sensing unit obtains change information of a magnetic field direction at a first position, where the magnetic field direction sensing unit is disposed on a first part of the bushing, a magnetic field at the first position is generated by a magnetic element disposed on a second part of the bushing, the first part of the bushing is one of the inner ring of the bushing or the outer ring of the bushing, the second part of the bushing is the other one of the inner ring of the bushing or the outer ring of the bushing, and the relative rotation information includes the change information of the magnetic field direction.

With reference to the second aspect, in some implementations of the second aspect, the magnetic field direction sensing unit and the magnetic element are disposed opposite to each other in an axial direction of the bushing, and a magnetization direction of the magnetic element is perpendicular to the axial direction of the bushing.

With reference to the second aspect, in some implementations of the second aspect, in the axial direction of the bushing, a projection area of the magnetic element is greater than a projection area of the magnetic field direction sensing unit, and a ratio of the projection area of the magnetic element to the projection area of the magnetic field direction sensing unit is greater than or equal to a first threshold.

With reference to the second aspect, in some implementations of the second aspect, that the magnetic field direction sensing unit is disposed on the first part of the bushing includes: The magnetic field direction sensing unit is fastened to a housing connected to the outer ring of the bushing.

With reference to the second aspect, in some implementations of the second aspect, the first position includes a plurality of positions. That the magnetic field direction sensing unit obtains the change information of the magnetic field direction at the first position includes: At least one pair of magnetic field direction sensing units obtains change information of magnetic field directions at the plurality of positions, where the at least one pair of magnetic field direction sensing units is disposed on a first end face of the first part of the bushing and evenly distributed in a circumferential direction, magnetic fields at the plurality of positions are generated by at least one pair of magnetic elements that is disposed on a first end face of the second part of the bushing and evenly distributed in a circumferential direction, and the at least one pair of magnetic field direction sensing units is in a one-to-one correspondence with the at least one pair of magnetic elements.

With reference to the second aspect, in some implementations of the second aspect, the at least one pair of magnetic field direction sensing units includes a first magnetic field direction sensing unit pair, and sensing directions of two magnetic field direction sensing units in the first magnetic field direction sensing unit pair are the same. The at least one pair of magnetic elements includes a first magnetic element pair, a first magnetic pole of a magnetic element in the first magnetic element pair points to an axis of the bushing, and an included angle between a magnetization direction of the magnetic element in the first magnetic element pair and the sensing direction of the magnetic field direction sensing unit in the first magnetic field direction sensing unit pair is greater than or equal to a second threshold.

With reference to the second aspect, in some implementations of the second aspect, a difference between a first distance and a second distance is less than a third threshold, and the first distance and the second distance are respectively distances between the axis of the bushing and the two magnetic field direction sensing units in the first magnetic field direction sensing unit pair; and/or a difference between a third distance and a fourth distance is less than a fourth threshold, and the third distance and the fourth distance are respectively distances between the axis of the bushing and two magnetic elements in the first magnetic element pair.

With reference to the second aspect, in some implementations of the second aspect, a magnetic field strength at the first position is greater than or equal to a fifth threshold.

With reference to the second aspect, in some implementations of the second aspect, obtaining the relative rotation information between the inner ring of the bushing and the outer ring of the bushing includes: obtaining, by at least one strain sensing unit, shape change information of vibration-absorbing rubber, where the vibration-absorbing rubber is disposed between the outer ring of the bushing and the inner ring of the bushing, and the at least one strain sensing unit is disposed on an end face of the vibration-absorbing rubber; and determining the relative rotation information between the inner ring of the bushing and the outer ring of the bushing based on the shape change information of the vibration-absorbing rubber.

According to a third aspect, a measurement apparatus is provided. The measurement apparatus includes a memory and a processor. The memory is configured to store a computer program. The processor is configured to execute the computer program stored in the memory, to enable the measurement apparatus to perform the method according to any one of the possible implementations of the second aspect.

According to a fourth aspect, a system is provided. The system includes a suspension system and the measurement apparatus according to any one of the possible implementations of the first aspect or the third aspect.

According to a fifth aspect, a vehicle is provided. The vehicle includes wheels, a bearing structure, a suspension system, and the measurement apparatus according to any one of the possible implementations of the first aspect or the third aspect.

According to a sixth aspect, a computer-readable storage medium is provided. The computer-readable storage medium stores instructions. When the instructions are executed by a processor, the processor is enabled to implement the method according to any one of the possible implementations of the second aspect.

According to a seventh aspect, a computer program product is provided. The computer program product includes computer program code. When the computer program code is run on a computer, the computer is enabled to perform the method according to any one of the possible implementations of the second aspect.

According to an eighth aspect, a chip is provided. The chip includes a circuit. The circuit is configured to perform the method according to any one of the possible implementations of the second aspect.

### BRIEF DESCRIPTION OF DRAWINGS

FIG. 1 is a diagram of an application scenario of a suspension system according to an embodiment of this application;
FIG. 2 is a diagram of a structure of a conventional suspension height measurement apparatus;
FIG. 3 is a diagram of an application scenario of a measurement apparatus according to an embodiment of this application;
FIG. 4 is a diagram of a structure of a measurement apparatus according to an embodiment of this application;
FIG. 5 is a diagram of an operating scenario of a magnetic field direction sensing unit according to an embodiment of this application;
FIG. 6 is a diagram of a structure of another measurement apparatus according to an embodiment of this application;
FIG. 7 is a diagram of an operating scenario of another magnetic field direction sensing unit according to an embodiment of this application;
FIG. 8 is a diagram of an operating scenario of a measurement apparatus according to an embodiment of this application;
FIG. 9 is a diagram of a structure of another measurement apparatus according to an embodiment of this application; and
FIG. 10 is a schematic flowchart of a measurement method according to an embodiment of this application.

### DESCRIPTION OF EMBODIMENTS

In the descriptions of this application, it should be noted that, unless otherwise specified, "a plurality of" means at least two; and the terms such as "up", "down", "left", "right", "inside", and "outside" indicate an orientation or a position relationship only for ease of describing this application and simplifying description, but do not indicate or imply that a specified apparatus or element needs to have a specific orientation and be constructed and operated in a specific orientation. Therefore, such terms cannot be understood as a limitation on this application. In addition, terms "first", "second", and "third" are merely intended for a descriptive purpose, and cannot be understood as indicating or implying relative importance. "Perpendicular" is not strictly perpendicular, but within an allowable error range. "Parallel" is not strictly parallel, but within an allowable error range.

It should be further noted that, unless otherwise specified and limited, the terms "installation", "interconnection", and "connection" should be understood in a broad sense. For example, the terms may be a fixed connection, a detachable connection, or an integrated connection, or may be a direct connection, or may be an indirect connection through an intermediate medium. A person of ordinary skill in the art may understand specific meanings of the foregoing terms in this application according to specific cases.

The following describes technical solutions of embodiments in this application with reference to accompanying drawings.

A suspension system may include a plurality of connection apparatuses disposed between a bearing structure and a wheel of a vehicle, and can transfer a force and a torque between the wheel and a vehicle body, buffer an impact force transferred by a road surface to the vehicle body through the wheel, and reduce vibration caused by road surface excitation.

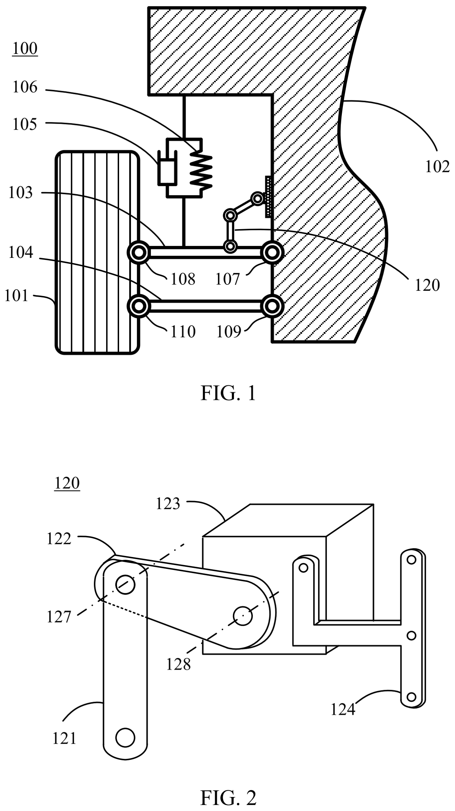

FIG. 1 is a diagram of an application scenario of a suspension system according to an embodiment of this application. As shown in FIG. 1, the suspension system 100 may mainly include an upper swing arm 103, a lower swing arm 104, a vibration absorber 105, a spring 106, and swing arm bushings (107, 108, 109, and 110). The vibration absorber 105 may provide a damping force to attenuate vibration. The spring 106 can support a weight of a vehicle body, and may provide a buffering function. The upper swing arm 103, the lower swing arm 104, the swing arm bushings (107, 108, 109, and 110), and the like form a guiding mechanism that can guide movement of a suspension by connecting a wheel 101 and a bearing structure 102 of a vehicle. For a non-load-bearing vehicle body, the bearing structure is a frame. For a load-bearing vehicle body, the bearing structure of the vehicle is the vehicle body. The following uses an example in which the bearing structure 102 is the frame for description. For a scenario related to the load-bearing vehicle body, the frame in the following may be adaptively replaced with the vehicle body.

Compared with a conventional suspension, an air suspension uses an air spring with a variable rigidity characteristic, so that ride comfort can be improved. The air suspension can further adjust a length of the air spring, to adjust a height of the vehicle body. An active suspension can perform dynamic adaptive adjustment on a rigidity characteristic and/or a damping characteristic of the active suspension based on a traveling condition of the vehicle, to improve operation stability and traveling smoothness of the vehicle.

To achieve the foregoing effect, compared with a conventional suspension system, the air suspension and the active suspension may further include a suspension height measurement apparatus 120 (as shown in FIG. 1), an electronic control unit, and an execution component (not shown in FIG. 1). The suspension height measurement apparatus 120 can measure a suspension height and obtain suspension height information. The electronic control unit can control, based on the obtained suspension height information, the execution component to operate, so as to implement functions of active vibration absorption and height adjustment. For example, for the air suspension, the execution component may include pneumatic elements such as an air pump and an air valve, and may be configured to adjust the length of the air spring, so as to adjust the height of the vehicle body. For another example, for the active suspension, the execution component may include active force-generating elements such as a motor and a hydraulic cylinder, and may be configured to implement a function of active vibration absorption. The following briefly describes the suspension height measurement apparatus with reference to FIG. 2.

For example, FIG. 2 is a diagram of a structure of a suspension height measurement apparatus 120. As shown in FIG. 2, the suspension height measurement apparatus 120 may include a pull rod 121, a swing rod 122, an angle sensor 123, a support 124, and a connecting piece (not shown in FIG. 2) between components. The swing rod 122 and the pull rod 121 may rotate relative to each other around an axis 127, and the swing rod 122 and the angle sensor 123 may rotate relative to each other around an axis 128. Through a fastener (for example, a bolt) or through a welding or riveting process, the support 124 may be fastened to a frame 102, and the pull rod 121 may be fastened to an upper swing arm or a lower swing arm.

In an embodiment, the scenario shown in FIG. 1 is used as an example. When a suspension height changes, a relative position between the upper swing arm 103 and the frame 102 changes. For the suspension height measurement apparatus 120, because the pull rod 121 is fastened to the upper swing arm 103, and the support 124 is fastened to the frame 102, the swing rod 122 in the suspension height measurement apparatus rotates around the axis 128 relative to the angle sensor 123. The suspension height can be obtained through conversion based on a rotation angle of the swing rod 122 relative to the angle sensor 123 and with reference to a kinematic relationship between the components.

However, due to limitation of an installation position and arrangement space, when the suspension height measurement apparatus is arranged in different vehicle types, adaptive design needs to be performed on the support 124, the pull rod 121, and the like, which leads to poor universality of the suspension height measurement apparatus. In addition, the swing rod needs extra operating space when rotating relative to the angle sensor. This limits the installation position of the suspension height measurement apparatus and increases difficulty in arranging the suspension height measurement apparatus.

In view of this, embodiments of this application provide a measurement apparatus and a measurement method, which can be applied to a plurality of different vehicle types and suspension height measurement scenarios, offer good universality for suspension height measurement, and are convenient for arrangement and installation.

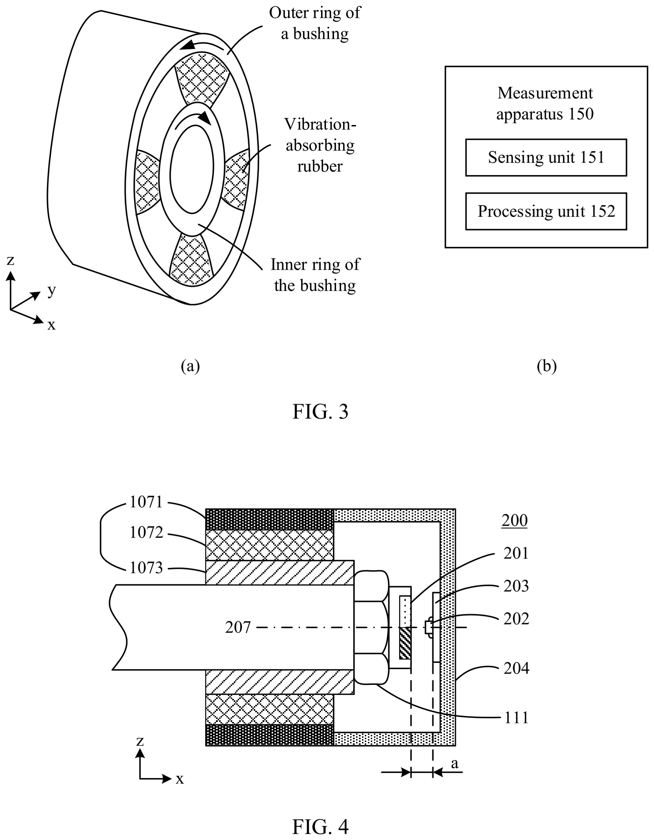

For example, FIG. 3 is a diagram of an application scenario of a measurement apparatus according to an embodiment of this application. As shown in (a) in FIG. 3, swing arm bushings (107, 108, 109, and 110) may separately include an outer ring of the bushing, an inner ring of the bushing, and vibration-absorbing rubber disposed between the outer ring of the bushing and the inner ring of the bushing.

With reference to the scenario shown in FIG. 1, because the swing arm bushings are disposed at connection parts between the swing arms (103 and 104) and the wheel 101 and/or the frame 102, when a suspension height changes, as shown in (a) in FIG. 3, relative movement between the swing arms (103 and 104) and the wheel 101 and/or the frame 102 drives the inner ring of the bushing and the outer ring of the bushing to rotate relative to each other. Correspondingly, vibration-absorbing rubber can be twisted and deformed.

As shown in (b) in FIG. 3, the measurement apparatus 150 may be configured to measure the suspension height, and the measurement apparatus 150 may include a sensing unit 151 and a processing unit 152. The sensing unit 151 may be configured to obtain relative rotation information between the inner ring of the bushing and the outer ring of the bushing. The processing unit 152 may be configured to determine first indication information based on the relative rotation information, where the first indication information indicates a height of a suspension system. The scenario shown in FIG. 1 is used as an example. Based on a kinematic relationship between components such as the wheel 101, the swing arms (103 and 104), the frame 102, the vibration absorber 105, and the spring 106, a change in the height of the suspension system may be calculated based on the relative rotation information between the inner ring of the bushing and the outer ring of the bushing. A changed suspension height may be obtained based on a suspension height in an initial state and the change in the suspension height.

For example, the relative rotation information between the inner ring of the bushing and the outer ring of the bushing may be measured in a plurality of manners. For example, a magnetic element and a magnetic field direction sensing unit may be respectively disposed on the outer ring of the bushing and the inner ring of the bushing, so that the magnetic element and the magnetic field direction sensing unit may respectively move with movement of the outer ring of the bushing and the inner ring of the bushing. For another example, the relative movement information between the outer ring of the bushing and the inner ring of the bushing may be determined based on twisting and deformation of the vibration-absorbing rubber.

In an embodiment, the measurement apparatus 150 may be disposed around the swing arm bushing, and communicates with processing apparatuses such as a vehicle domain controller and an autonomous driving domain controller through a communication circuit of a vehicle. For example, the processing unit 152 may calculate the height of the suspension system based on the relative rotation information between the inner ring of the bushing and the outer ring of the bushing. Correspondingly, indication information sent by the measurement apparatus 150 to a domain controller includes the height of the suspension system. For another example, the indication information sent by the measurement apparatus 150 to the domain controller may include a relative rotation angle between the inner ring of the bushing and the outer ring of the bushing. Correspondingly, the domain controller may calculate the height of the suspension system based on the indication information.

The following further describes the measurement apparatus in embodiments of this application with reference to FIG. 4 to FIG. 9.

For example, FIG. 4 is a diagram of a structure of a measurement apparatus according to an embodiment of this application. A component in FIG. 4 that has a same or similar function as that in FIG. 1 uses a same number as that in FIG. 1. The measurement apparatus 200 may be considered as an implementation of the measurement apparatus 150.

It is assumed that the measurement apparatus 200 is disposed on a swing arm bushing 107, and a suspension height can be determined based on relative rotation information between an inner ring 1073 of the bushing and an outer ring 1071 of the bushing. FIG. 4 may be understood as a sectional view of a cross section of the swing arm bushing 107 (the section is in an x direction).

In an embodiment, the scenario shown in FIG. 1 is used as an example. The outer ring 1071 of the bushing may be fastened to the upper swing arm 103, and the inner ring 1073 of the bushing may be fastened to the frame 102 through a fastener (for example, a bolt 111), as shown in FIG. 4. In this case, when the suspension height changes, a relative position between the swing arm 103 and the frame 102 and the wheel 101 changes. For the swing arm bushing 107, because the outer ring 1071 of the bushing is static relative to the swing arm 103, and the inner ring 1073 of the bushing is static relative to the frame 102, a relative position between the outer ring 1071 of the bushing and the inner ring 1073 of the bushing changes, and the vibration-absorbing rubber 1072 is twisted.

For example, the measurement apparatus 200 may include a magnetic field direction sensing unit 202 and a processing unit 203. A magnetic field at an installation position of the magnetic field direction sensing unit 202 may be generated by the magnetic element 201. The magnetic field direction sensing unit 202 may sense a change in the magnetic field at the position of the magnetic field direction sensing unit 202.

In an embodiment, the magnetic element 201 and the magnetic field direction sensing unit 202 may be respectively disposed on the outer ring 1071 of the bushing and the inner ring 1073 of the bushing. In other words, the magnetic element 201 and the magnetic field direction sensing unit 202 may respectively remain static relative to the outer ring 1071 of the bushing and the inner ring 1073 of the bushing. The magnetic field direction sensing unit 202 senses a change in a magnetic field direction, so that relative rotation information between the outer ring 1071 of the bushing and the inner ring 1073 of the bushing can be determined.

In another embodiment, as shown in FIG. 4, the magnetic element 201 and the magnetic field direction sensing unit 202 may be coaxially disposed, for example, disposed opposite to each other along an axis 207 of the bushing, and a magnetization direction of the magnetic element 201 may be perpendicular to the axis 207 of the bushing.

For example, the magnetic element 201 may belong to the measurement apparatus 200, or may not belong to the measurement apparatus 200.

In an embodiment, the measurement apparatus 200 may not include the magnetic element 201. For example, the measurement apparatus 200 includes only the processing unit 203 and the magnetic field direction sensing unit 202 that is disposed statically relative to the outer ring 1071 of the bushing. In this scenario, information such as specifications and an installation position of the magnetic element 201 that can adapt to the magnetic field direction sensing unit 202 may be indicated in guide documents such as a product instruction manual and a user manual of the measurement apparatus 200. The corresponding magnetic element is adapted, so that the change, of the magnetic field direction, sensed by the magnetic field direction sensing unit 202 can reflect the relative rotation information between the outer ring 1071 of the bushing and the inner ring 1073 of the bushing.

For example, as shown in FIG. 4, the magnetic field direction sensing unit 202 and the processing unit 203 may be fastened to a housing 204, and the housing 204 may be connected to the outer ring 1071 of the bushing through a buckle, a bolt, or the like. The magnetic element 201 may be mechanically connected to the fastener 111 and the inner ring 1073 of the bushing through welding, riveting, or a buckle, so as to be fastened to the frame 102. In this scenario, when a change in the suspension height causes a change in a relative position between the upper swing arm 103 and the frame 102, a relative position between the magnetic element 201 that remains static relative to the frame 102 and the magnetic field direction sensing unit 202 that remains static relative to the upper swing arm 103 changes, and the processing unit 203 may determine the change in the suspension height based on a level signal generated accordingly.

In an embodiment, the magnetic element 202 may be fastened to the housing 204, and the magnetic field direction sensing unit 202 and the processing unit 203 may be connected to the fastener 111 through gluing, clamping, or the like, to remain static relative to the inner ring 1073 of the bushing and the frame 102.

In another embodiment, the measurement apparatus 200 is alternatively disposed on a swing arm bushing 108, 109, or 110.

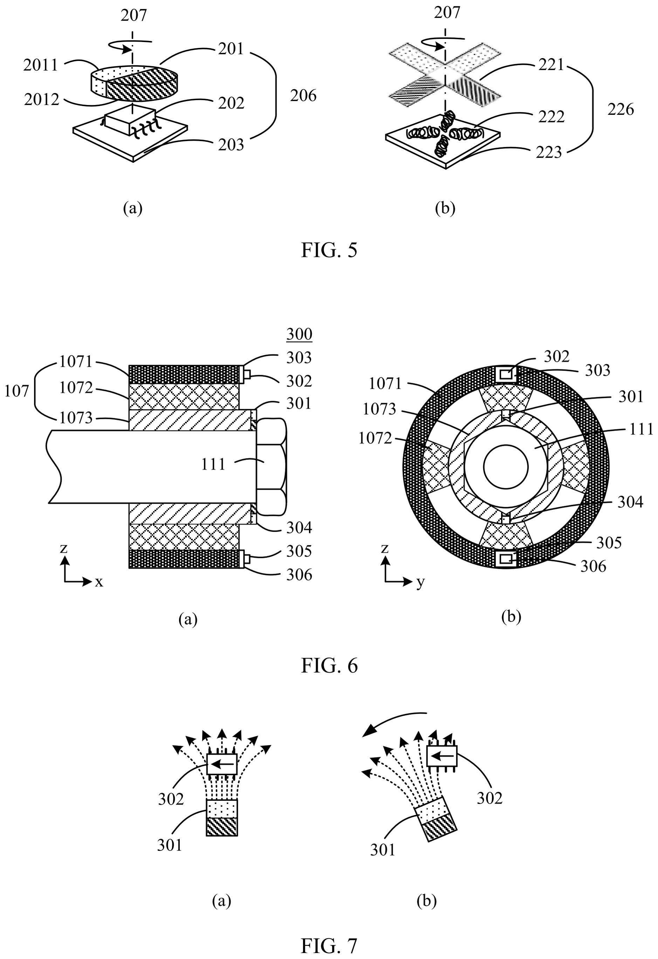

For example, FIG. 5 is a diagram of an operating scenario of a magnetic field direction sensing unit according to an embodiment of this application. As shown in (a) in FIG. 5, the magnetic element 201, the magnetic field direction sensing unit 202, and the processing unit 203 may form an angle measurement unit 206.

In an embodiment, the magnetic element 201 may be in a shape of a cuboid, a cube, or the like.

In another embodiment, to reduce interference caused by fluctuation, of a magnetic field strength, sensed by the magnetic field direction sensing unit 202 to a measurement result, as shown in (a) in FIG. 5, the magnetic element 201 may be disk-shaped, and a magnetization direction may be a radial direction of a circumference.

In another embodiment, to further reduce the interference caused by the fluctuation of the magnetic field strength to the measurement result, a dividing line between a south pole part 2011 and a north pole part 2012 of the magnetic element 201 may be parallel to the axis 207. In other words, the magnetization direction of the magnetic element 201 may be perpendicular to the axis 207, as shown in (a) in FIG. 5. A rotation plane of the magnetic element 201 may also be perpendicular to the axis 207. Further, the magnetic element 201 and the magnetic field direction sensing unit 202 may be coaxially disposed opposite to each other along the axis 207.

A scenario shown in (a) in FIG. 5 is used as an example. It is assumed that the magnetic field direction sensing unit 202 and the processing unit 203 are static. When the magnetic element 201 rotates around the axis 207, the magnetic field direction sensing unit 202 may generate a corresponding electrical signal based on a change in a magnetic field direction. The processing unit 203 may determine, based on the electrical signal, a rotation angle of the magnetic element 201 relative to the axis 207. Kinematic characteristics (such as a size and an initial angle) of a swing arm, a spring and a vibration absorber in a suspension system are combined, so that a suspension height can be calculated.

In an actual scenario, even in a design state, the magnetic element 201 and the magnetic field direction sensing unit 202 are coaxially disposed along the axis 207 relative to each other. Factors such as installation and vibration may cause eccentricity between the magnetic element 201 and the magnetic field direction sensing unit 202, which affects accuracy of the measurement result.

In an embodiment, to reduce impact of eccentricity on the measurement result, in a direction of the axis 207, a ratio of a projection area of the magnetic element 201 to a projection area of the magnetic field direction sensing unit 202 is greater than or equal to a first threshold. For example, the first threshold is 5 or 8, or may be another size.

In this embodiment of this application, in the foregoing axial direction, when the projection area of the magnetic element 207 is far greater than the projection area of the magnetic field direction sensing unit 202, measurement errors caused by eccentricity between the magnetic element 207 and the magnetic field direction sensing unit 202 can be reduced.

In another embodiment, the magnetic field direction sensing unit 202 may use an element that has low sensitivity to a magnetic field strength, such as a magneto-resistance sensor. In this manner, errors caused by eccentricity between the magnetic element 201 and the magnetic field direction sensing unit 202 and irregular shapes of the magnetic element 201 and the magnetic field direction sensing unit 202 can be reduced.

In another embodiment, in the direction of the axis 207, a distance (denoted as a) between the magnetic element 201 and the magnetic field direction sensing unit 202 needs to meet a preset condition. For example, a may fall within a preset range. A lower limit value of the preset range may be 30 millimeters (millimeters, mm), 28 mm, 35 mm, or another value. An upper limit value of the preset range may be 48 mm, 50 mm, or 55 mm. The lower limit value or the upper limit value may alternatively be another value.

For example, an angle measurement unit 226 shown in (b) in FIG. 5 may be understood as a deformation or an extension of the angle measurement unit 206. The angle measurement unit 226 may include a magnetic element 221, a magnetic field direction sensing unit 222, and a processing unit 223.

In an embodiment, as shown in (b) in FIG. 5, the magnetic element 221 may include a plurality of permanent magnets distributed in a circumferential direction, and the magnetic field direction sensing unit 222 may include a plurality of coils distributed in a circumferential direction. When the magnetic element 221 rotates around the axis 207, the coils in the magnetic field direction sensing unit 222 may generate corresponding signals in a changing magnetic field, so that a rotation angle of the magnetic element 221 can be measured.

In some possible implementations, the magnetic element 221 may include more or fewer permanent magnets, for example, three, six, or another quantity of permanent magnets. Correspondingly, the magnetic field sensing unit 222 may include more or fewer induction coils.

The following briefly describes another measurement apparatus 300 provided in this application with reference to FIG. 6 to FIG. 8. The measurement apparatus 300 may be considered as another implementation of the measurement apparatus 150.

For example, FIG. 6 is a diagram of a structure of another measurement apparatus according to an embodiment of this application. (a) in FIG. 6 may be understood as a diagram of a cross section of a swing arm bushing 107, and (b) in FIG. 6 may be understood as a diagram of a longitudinal section of the swing arm bushing.

As shown in (a) in FIG. 6, the measurement apparatus 300 may include a magnetic field direction sensing unit 302 and a magnetic field direction sensing unit 305, which may be respectively configured to measure directions of magnetic fields generated by a magnetic element 301 and a magnetic element 304.

In an embodiment, the magnetic element 301 and the magnetic element 304 may be fastened to an end face on one side of an inner ring 1073 of a bushing through a fastener (for example, a bolt 111) or through another process such as gluing or clamping, as shown in (a) in FIG. 6. Correspondingly, the magnetic field direction sensing unit 302 and the magnetic field direction sensing unit 305 may be fastened to an end face on the same side of an outer ring 1071 of the bushing.

In another embodiment, magnetization directions of the magnetic element 301 and the magnetic element 304 may be radial directions of a circumference, and the magnetization directions of the magnetic element 301 and the magnetic element 304 may be opposite. For example, an upper part of 301 is a north pole of a magnetic field of 301, and an upper part of 304 is a south pole of a magnetic field of 304. Magnetic field sensing directions of the magnetic field direction sensing unit 302 and the magnetic field direction sensing unit 305 are the same. For example, when the magnetic field direction sensing unit 302 and the magnetic field direction sensing unit 305 sense a leftward magnetic field, both of the magnetic field direction sensing unit 302 and the magnetic field direction sensing unit 305 may output positive level signals; and when the magnetic field direction sensing unit 302 and the magnetic field direction sensing unit 305 sense a rightward magnetic field, both of the magnetic field direction sensing unit 302 and the magnetic field direction sensing unit 305 output negative level signals.

The magnetic field direction sensing unit 302 and the magnetic field direction sensing unit 305 may be understood as a pair of magnetic field direction sensing units (which may also be referred to as a magnetic field direction sensing unit pair), and correspondingly, the magnetic element 301 and the magnetic element 304 may be understood as a pair of magnetic elements (which may also be referred to as a magnetic element pair).

The magnetic field direction sensing unit 302 may be arranged opposite to the magnetic element 301. Therefore, the magnetic element 301 and the magnetic field direction sensing unit 302 may form an angle measurement unit #1. Similarly, the magnetic field direction sensing unit 305 may be arranged opposite to the magnetic element 304, to form an angle measurement unit #2. The following briefly describes a working manner of the magnetic field direction sensing unit in the measurement apparatus 300 by using the angle measurement unit #1 as an example with reference to FIG. 7.

For example, FIG. 7 is a diagram of an operating scenario of another magnetic field direction sensing unit. As shown in (a) in FIG. 7, the upper part of the magnetic element 301 is the north pole of the magnetic field of the magnetic element 301, and a lower part of the magnetic element 301 is a south pole of the magnetic field of the magnetic element 301. A magnetic induction line is emitted from the north pole of the magnetic field and points to the south pole of the magnetic field. The sensing direction of the magnetic field direction sensing unit 302 is leftward.

(a) in FIG. 7 may be understood as an initial state of the magnetic element 301 and the magnetic field direction sensing unit 302, that is, may be understood as a state in which positions of the outer ring 1071 of the bushing and the inner ring 1073 of the bushing do not change relative to each other.

It is assumed that the magnetic field direction sensing unit 302 is static. When the magnetic element 301 moves in a direction of an arrow, as shown in (b) in FIG. 7, a magnetic field direction sensed by the magnetic field direction sensing unit 302 changes. Correspondingly, a signal output by the magnetic field direction sensing unit 302 changes accordingly.

In an embodiment, a distance between the magnetic element 301 and the magnetic field direction sensing unit 302 needs to meet a preset condition. For example, in a scenario shown in (a) in FIG. 7, the distance between the magnetic element 301 and the magnetic field direction sensing unit 302 may fall within a preset range. For example, a minimum value of the preset range may be 25 mm, 28 mm, 30 mm, or the like, and a maximum value of the preset range may be 40 mm or 45 mm. The maximum value and/or the minimum value of the preset range may alternatively be other values.

For example, the measurement apparatus 300 may further include a processing unit 303 and/or a processing unit 306. The processing unit 303 and the processing unit 306 may be a same processing unit, or may be different processing units. For example, the magnetic field direction sensing unit 302 and the magnetic field direction sensing unit 305 may be disposed on a same circuit board, and the circuit board is fastened to the outer ring 1071 of the bushing. The circuit board includes the processing unit 303, and the magnetic field direction sensing unit 302 and the magnetic field direction sensing unit 305 may send electrical signals to the processing unit.

In an embodiment, the magnetic field direction sensing unit 302 and the magnetic field direction sensing unit 305 may use elements that have low sensitivity to a magnetic field strength, such as magneto-resistance sensors.

In another embodiment, the magnetic element 301 and the magnetic element 304 may be disposed on the outer ring of the bushing, and the magnetic field direction sensing unit 302 and the magnetic field direction sensing unit 305 may be disposed on the inner ring of the bushing.

In another embodiment, the measurement apparatus 300 may further include more magnetic field direction sensing units or more pairs of magnetic field direction sensing units, and corresponding magnetic elements. For example, the measurement apparatus 300 may include three magnetic field direction sensing units, and the three magnetic field direction sensing units may be evenly disposed on an end face on one side of the outer ring of the bushing in a circumferential direction. Correspondingly, three magnetic elements may be evenly disposed on an end face on the same side of the inner ring of the bushing in a circumferential direction. For another example, the measurement apparatus 300 may include two pairs of magnetic field direction sensing units, and the two pairs of magnetic field direction sensing units may be evenly disposed on an end face on one side of the outer ring of the bushing in the circumferential direction. Two pairs of magnetic elements may be evenly disposed on an end face on the same side of the inner ring of the bushing in the circumferential direction.

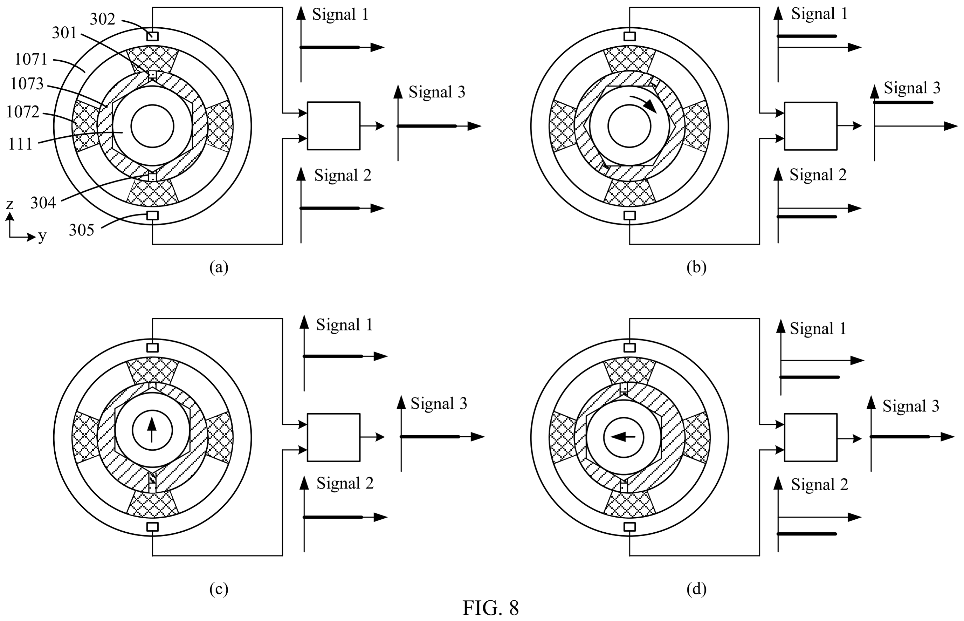

For example, the scenario shown in FIG. 6 is used as an example. The magnetic element 301 and the magnetic field direction sensing unit 302 are disposed opposite to each other, and are respectively disposed on upper sides of the inner ring 1073 of the bushing and the outer ring 1071 of the bushing. The magnetic element 304 and the magnetic field direction sensing unit 305 are disposed opposite to each other, and are respectively disposed on lower sides of the inner ring 1073 of the bushing and the outer ring 1071 of the bushing. The magnetization directions of the magnetic element 301 and the magnetic element 304 are opposite, and the magnetic field sensing directions of the magnetic field direction sensing unit 302 and the magnetic field direction sensing unit 305 are the same. The magnetic field direction sensing unit 302 and the magnetic field direction sensing unit 305 respectively sense the magnetic fields of the magnetic element 301 and the magnetic element 304 and convert the magnetic fields into electrical signals. In other words, measurement directions of the angle measurement unit #1 and the angle measurement unit #2 are opposite. The following briefly describes a working manner of the measurement apparatus 300 in this state with reference to FIG. 8. (a) to (d) in FIG. 8 separately show output of the measurement apparatus 300 in different states. The magnetic field direction sensing unit 302 may generate a signal 1, and the magnetic field direction sensing unit 305 may generate a signal 2. The signal 3 may be understood as a difference between the signal 1 and the signal 2. The suspension height may be obtained based on the signal 3 and a mapping relationship between a suspension height and a level.

When the suspension height is in an initial state, the sensing direction of the magnetic field direction sensing unit 302 is perpendicular to a magnetic field direction of 301, the sensing direction of the magnetic field direction sensing unit 305 is perpendicular to a magnetic field direction of the magnetic element 304, and the magnetic field direction sensing unit 302 and the magnetic field direction sensing unit 305 output a zero level. For example, the signals output by the magnetic field direction sensing unit 302 and the magnetic field direction sensing unit 305 may be respectively shown by the signal 1 and the signal 2 shown in (a) in FIG. 8. In this case, the signal 3 is a zero level, which may indicate that the suspension height is an initial height.

When the suspension height changes, the outer ring 1071 of the bushing rotates relative to the inner ring 1073 of the bushing. As a result, the magnetic field direction sensing unit 302 and the magnetic field direction sensing unit 305 rotate respectively relative to the magnetic element 301 and the magnetic element 304, and generated level signals changes. However, because the magnetization directions of the magnetic element 301 and the magnetic element 304 are opposite, and the magnetic field sensing directions of the magnetic field direction sensing unit 302 and the magnetic field direction sensing unit 305 are the same, one of the magnetic field direction sensing unit 302 and the magnetic field direction sensing unit 305 generates a positive level signal, and the other one of the magnetic field direction sensing unit 302 and the magnetic field direction sensing unit 305 generates a negative level signal. For example, when the inner ring 1073 of the bushing rotates relative to the outer ring 1071 of the bushing in a direction of an arrow shown in (b) in FIG. 8, the signal 1 may be a positive level signal, and the signal 2 may be a negative level signal.

When longitudinal eccentricity (z-direction eccentricity) exists between the outer ring 1071 of the bushing and the inner ring 1073 of the bushing, because the magnetic field direction of the magnetic element is perpendicular to the sensing direction of the magnetic field direction sensing unit, the magnetic field direction sensing unit 302 and the magnetic field direction sensing unit 305 still output a zero level. For example, when the inner ring 1073 of the bushing translates in a direction of an arrow shown in (c) in FIG. 8 relative to the outer ring 1071 of the bushing, the signal 1 and the signal 2 may be shown in (c) in FIG. 8.

When transverse eccentricity (y-direction eccentricity) exists between the outer ring 1071 of the bushing and the inner ring 1073 of the bushing, because the magnetization directions of the magnetic element 301 and the magnetic element 304 are opposite, and the sensing directions of the magnetic field direction sensing unit 302 and the magnetic field direction sensing unit 305 are the same, the signal 1 and the signal 2 are both positive levels or negative levels. For example, when the inner ring 1073 of the bushing translates in a direction of an arrow shown in (d) in FIG. 8 relative to the outer ring 1071 of the bushing, both the signal 1 and the signal 2 may be negative level signals. For another example, it is assumed that the magnetic element 301 and the magnetic element 304 are permanent magnets of a same model and have a same radial distance to an axis of the swing arm bushing, and the magnetic field direction sensing unit 302 and the magnetic field direction sensing unit 305 are magneto-resistance sensors of a same model and have a same radial distance to the axis of the swing arm bushing. In this scenario, the signal 1 and the signal 2 may be equal, and the signal 3 may be zero.

In an embodiment, the measurement directions of the angle measurement unit #1 and the angle measurement unit #2 may be the same. In this case, the suspension height may be determined based on a sum of the signals output by the magnetic field direction sensing unit 302 and the magnetic field direction sensing unit 305 and the mapping relationship between the suspension height and the level.

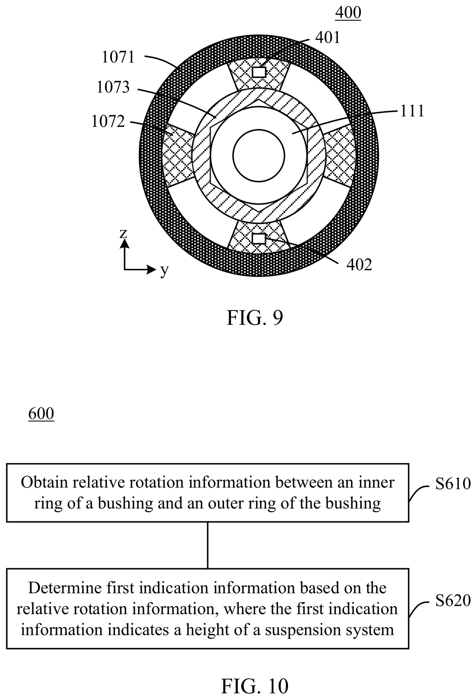

For example, FIG. 9 is a diagram of another measurement apparatus according to an embodiment of this application. As shown in FIG. 9, the measurement apparatus 400 may include a plurality of strain units, for example, strain units 401 and 402, and further include a processing unit 403 (not shown in the figure).

The plurality of strain units 401 are disposed on an end face of vibration-absorbing rubber of a swing arm bushing, and are configured to sense deformation of the vibration-absorbing rubber. The processing unit 403 is configured to determine a suspension height based on deformation at a plurality of positions of the vibration-absorbing bushing. A swing arm bushing 107 is used as an example. When the suspension height changes, and consequently a relative position between an upper swing arm 103 and a frame 102 changes, vibration-absorbing rubber 1072 is twisted. Therefore, deformation at the plurality of positions of the vibration-absorbing bushing is determined, so that the suspension height can be determined.

In some possible implementations, the measurement apparatus 400 may include more or fewer strain units, for example, three or five strain units.

For example, FIG. 10 is a schematic flowchart of a measurement method according to an embodiment of this application. The method 600 may be performed by the measurement apparatus 150, or may be performed by the processing unit 152, or may be performed by one or more processors included in the processing unit 152. The method 600 may include the following steps.

S610: Obtain relative rotation information between an inner ring of a bushing and an outer ring of the bushing.

S620: Determine first indication information based on the relative rotation information, where the first indication information indicates a height of a suspension system.

Optionally, obtaining the relative rotation information between the inner ring of the bushing and the outer ring of the bushing may include: obtaining change information of a magnetic field direction at a first position of a first part of the bushing; and determining the first indication information based on the relative rotation information may include: determining the first indication information based on the change information of the magnetic field direction at the first position.

For example, the first part of the bushing may be one of the inner ring of the bushing or the outer ring of the bushing, and the second part of the bushing may be the other of the inner ring of the bushing or the outer ring of the bushing. A magnetic field direction sensing unit (for example, the foregoing magnetic field direction sensing unit 202, 222, or 302) may be disposed on the first part of the swing arm bushing, and (for example, 201, 221, or 301) may be disposed on the second part of the swing arm bushing. In other words, the magnetic field direction sensing unit is static relative to the first part of the swing arm bushing, and is static relative to the second part of the swing arm bushing.

In some possible implementations, the magnetic field direction sensing unit and the magnetic element are disposed opposite to each other in an axial direction of the bushing, and a magnetization direction of the magnetic element is perpendicular to the axial direction of the bushing. For example, the magnetic field direction sensing unit and the magnetic element are disposed in the manner shown in (a) or (b) in FIG. 5.

In some possible implementations, in the axial direction of the bushing, a ratio of a projection area of the magnetic element to a projection area of the magnetic field direction sensing unit is greater than or equal to a first threshold. For example, it is assumed that the first threshold is 5. In the direction of the axis 207, the projection area of the magnetic element 201 is at least five times the projection area of the magnetic field direction sensing unit.

In some possible implementations, the magnetic field direction sensing unit is fastened to a housing connected to the outer ring of the bushing.

In some possible implementations, obtaining the relative rotation information between the inner ring of the bushing and the outer ring of the bushing may include: obtaining change information, of a magnetic field direction, obtained by at least one pair of magnetic field direction sensing units; and determining the first indication information based on the relative movement information may include: determining the first indication information based on the change information, of the magnetic field direction, obtained by the at least one pair of magnetic field direction sensing units. The at least one pair of magnetic field direction sensing units is disposed on a first end face of the first part of the swing arm bushing, and is evenly distributed in a circumferential direction. The at least one pair of magnetic field direction sensing units is in a one-to-one correspondence with at least one pair of magnetic elements. The at least one pair of magnetic elements is disposed on a first end face of the second part of the swing arm bushing, and is evenly distributed in a circumferential direction. For example, as shown in FIG. 6, the magnetic field direction sensing unit 302 and the magnetic field direction sensing unit 305 are separately disposed on the end face of the outer ring 1071 of the bushing, and the corresponding magnetic element 301 and magnetic element 304 are separately disposed on the end face on the same side of the outer ring 1073 of the bushing.

In an embodiment, sensing directions of two magnetic field direction sensing units in a magnetic field direction sensing unit pair are the same, and first magnetic poles of two magnetic elements in a magnetic element pair are disposed opposite to each other. For example, as shown in FIG. 6, the sensing directions of the magnetic field direction sensing unit 302 and the magnetic field direction sensing unit 305 are the same, and south poles (or north poles) of the magnetic element 301 and the magnetic element 304 are disposed opposite to each other.

In another embodiment, an included angle between the sensing direction of the magnetic field direction sensing unit in the magnetic field direction sensing unit pair and a magnetization direction of the magnetic element in the corresponding magnetic element pair is greater than or equal to a second threshold. For example, as shown in (a) in FIG. 7, the magnetization direction of the magnetic element 301 is perpendicular to the sensing direction of the magnetic field direction sensing unit 302.

In another embodiment, as shown in FIG. 6, it is assumed that the magnetic field direction sensing unit 302 is disposed on a first circumference using the axis of the bushing as a reference, the magnetic field direction sensing unit 305 is disposed on a second circumference using the axis of the bushing as a reference, and a difference between radiuses of the first circumference and the second circumference is less than or equal to a third threshold (for example, 3 mm or 5 mm).

In another embodiment, as shown in FIG. 6, it is assumed that the magnetic element 301 is disposed on a third circumference using the axis of the bushing as a reference, the magnetic element 304 is disposed on a fourth circumference using the axis of the bushing as a reference, and a difference between radiuses of the third circumference and the fourth circumference is less than or equal to a fourth threshold (for example, 3 mm or 4 mm).

In another embodiment, an absolute value of a difference between radiuses of the first circumference and the third circumference may fall within a preset range, for example, from 25 mm to 40 mm.

When the eccentricity shown in (c) or (d) in FIG. 8 exists between the inner ring of the bushing and the outer ring of the bushing, because the eccentricity is far less than a minimum value (for example, 25 mm) of the preset range, a magnetic induction line distribution change caused by the eccentricity may be far less than a magnetic field direction change caused by rotation between the inner ring of the bushing and the outer ring of the bushing, so that impact of the eccentricity on a measurement result can be reduced. In addition, because the absolute value of the difference between the radiuses of the first circumference and the third circumference is less than a maximum value (for example, 40 mm) of the preset range, it can be ensured that the magnetic field direction sensing unit can sense a magnetic field of a sufficient strength in a relative rotation process of the inner ring of the bushing and the outer ring of the bushing.

In some other implementations, the maximum value and/or the minimum value of the preset range may be other values.

In another embodiment, a magnetic field strength at a position of the magnetic field direction sensing unit is greater than or equal to a fifth threshold. For example, as shown in FIG. 4, a magnetic field strength at the position of the magnetic field direction sensing unit 202 may be greater than or equal to 30 millitesla. For another example, as shown in FIG. 6, a magnetic field strength at a position of the magnetic field direction sensing unit 302 and/or a magnetic field strength at a position of the magnetic field direction sensing unit 305 may be greater than or equal to 28 millitesla.

Optionally, obtaining the relative rotation information between the inner ring of the bushing and the outer ring of the bushing may include: obtaining deformation information of vibration-absorbing rubber; and determining the relative rotation information between the inner ring of the bushing and the outer ring of the bushing based on the deformation information of the vibration-absorbing rubber. For example, as shown in FIG. 9, when the inner ring 1073 of the bushing and the outer ring 1071 of the bushing rotate relative to each other, the vibration-absorbing rubber 1072 is deformed. The deformation information of the vibration-absorbing rubber 1072 may be obtained by using the strain sensing unit 401 and/or the strain sensing unit 402, and relative movement information between the inner ring 1073 of the bushing and the outer ring 1071 of the bushing may be calculated based on the deformation information.

An embodiment of this application further provides a bushing having a measurement function. The bushing may include an inner ring of the bushing, an outer ring of the bushing, vibration-absorbing rubber, and the measurement apparatus shown in any one of FIG. 3 to FIG. 9.

An embodiment of this application further provides a system. The system includes a swing arm, a vibration absorber, a bushing, and the measurement apparatus shown in any one of FIG. 3 to FIG. 9.

An embodiment of this application further provides an intelligent driving device. The intelligent driving device includes a suspension system and the measurement apparatus shown in any one of FIG. 3 to FIG. 9.

The intelligent driving device in this application may include a transportation means on a road, a transportation means on water, an air transportation means, an industrial device, an agricultural device, an entertainment device, or the like. For example, the intelligent driving device may be a vehicle. The vehicle is a vehicle in a broad sense, and may be a transportation means (for example, a commercial vehicle, a passenger vehicle, a motorcycle, an airborne vehicle, or a train), an industrial vehicle (for example, a forklift truck, a trailer, or a tractor), an engineering vehicle (for example, an excavator, a bulldozer, or a crane), an agricultural device (for example, a lawn mower or a harvester), an entertainment device, a toy vehicle, or the like. A type of the vehicle is not specifically limited in embodiments of this application. For example, the vehicle in this application may include a pure electric vehicle (pure electric vehicle/battery electric vehicle, pure EV/battery EV), a hybrid electric vehicle (hybrid electric vehicle, HEV), a range-extended electric vehicle (range-extended electric vehicle, REEV), a plug-in hybrid electric vehicle (plug-in hybrid electric vehicle, PHEV), a new energy vehicle (new energy vehicle, NEV), or the like.

Terms used in embodiments of this application are merely for the purpose of describing specific embodiments, but are not intended to limit this application. The terms "one", "a", "the", "the foregoing", "this", and "the one" of singular forms used in this specification and the appended claims of this application are also intended to include expressions such as "one or more", unless otherwise specified in the context clearly. It should be further understood that in the following embodiments of this application, "at least one" and "one or more" refer to one, two, or more. The term "and/or" is used to describe an association relationship between associated objects and represents that three relationships may exist. For example, A and/or B may represent the following cases: Only A exists, both A and B exist, and only B exists, where A and B may be singular or plural. The character "/" generally indicates an "or" relationship between the associated objects.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of software functional unit and sold or used as an independent product, the functions may be stored in a computer-readable storage medium. Based on such an understanding, the technical solutions of this application essentially, or the part contributing to a conventional technology, or some of the technical solutions may be implemented in a form of software product. The computer software product is stored in a storage medium, and includes several instructions for indicating a computer device (which may be a personal computer, a server, a network device, or the like) to perform all or a part of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A measurement apparatus, configured to measure a height of a suspension system disposed between a bearing structure and a wheel of a vehicle, wherein the suspension system comprises a vibration absorber, a swing arm, and a bushing, the swing arm is disposed between the bearing structure and the wheel, the vibration absorber is disposed between the swing arm and the bearing structure, the bushing is disposed at a connection part between the swing arm and the bearing structure and/or the wheel, the bushing comprises an inner ring of the bushing and an outer ring of the bushing, and the measurement apparatus comprises:
a sensing unit, configured to obtain relative rotation information between the inner ring of the bushing and the outer ring of the bushing; and
a processing unit, configured to determine first indication information based on the relative rotation information, wherein the first indication information indicates the height of the suspension system.

2. The measurement apparatus according to claim 1, wherein the sensing unit comprises:
a magnetic field direction sensing unit disposed at a first position of a first part of the bushing, wherein the magnetic field direction sensing unit is configured to obtain change information of a magnetic field direction at the first position, the relative rotation information comprises the change information of the magnetic field direction at the first position, and the first part of the bushing is one of the inner ring of the bushing or the outer ring of the bushing.

3. The measurement apparatus according to claim 2, wherein a magnetic element is disposed on a second part of the bushing, the magnetic element is configured to generate a magnetic field at the first position, and the second part of the bushing is the other one of the inner ring of the bushing or the outer ring of the bushing.

4. The measurement apparatus according to claim 3, wherein the magnetic field direction sensing unit and the magnetic element are disposed opposite to each other in an axial direction of the bushing, and a magnetization direction of the magnetic element is perpendicular to the axial direction of the bushing.

5. The measurement apparatus according to claim 3 or 4, wherein in the axial direction of the bushing, a projection area of the magnetic element is greater than a projection area of the magnetic field direction sensing unit, and a ratio of the projection area of the magnetic element to the projection area of the magnetic field direction sensing unit is greater than or equal to a first threshold.

6. The measurement apparatus according to any one of claims 2 to 5, wherein the measurement apparatus further comprises a housing connected to the outer ring of the bushing, and the magnetic field direction sensing unit is fastened to the housing.

7. The measurement apparatus according to claim 2, wherein the sensing unit comprises:
at least one pair of magnetic field direction sensing units disposed on a first end face of the first part of the bushing and evenly distributed in a circumferential direction.

8. The measurement apparatus according to claim 7, wherein the measurement apparatus further comprises:
at least one pair of magnetic elements disposed on a first end face of a second part of the bushing and evenly distributed in a circumferential direction, wherein the at least one pair of magnetic elements is in a one-to-one correspondence with the at least one pair of magnetic field direction sensing units, and the second part of the bushing is the other one of the inner ring of the bushing or the outer ring of the bushing.

9. The measurement apparatus according to claim 8, wherein
the at least one pair of magnetic field direction sensing units comprises a first magnetic field direction sensing unit pair, and sensing directions of two magnetic field direction sensing units in the first magnetic field direction sensing unit pair are the same; and
the at least one pair of magnetic elements comprises a first magnetic element pair, a first magnetic pole of a magnetic element in the first magnetic element pair points to an axis of the bushing, and an included angle between a magnetization direction of the magnetic element in the first magnetic element pair and the sensing direction of the magnetic field direction sensing unit in the first magnetic field direction sensing unit pair is greater than or equal to a second threshold.

10. The measurement apparatus according to claim 9, wherein
a difference between a first distance and a second distance is less than a third threshold, and the first distance and the second distance are respectively distances between the axis of the bushing and the two magnetic field direction sensing units in the first magnetic field direction sensing unit pair; and/or
a difference between a third distance and a fourth distance is less than a fourth threshold, and the third distance and the fourth distance are respectively distances between the axis of the bushing and two magnetic elements in the first magnetic element pair.

11. The measurement apparatus according to any one of claims 2 to 9, wherein the magnetic field direction sensing unit comprises a magneto-resistance sensor or a plurality of magnetic induction coils.

12. The measurement apparatus according to any one of claims 2 to 10, wherein a magnetic field strength at the first position is greater than or equal to a fifth threshold.

13. The measurement apparatus according to claim 1, wherein the sensing unit comprises at least one strain sensing unit, the at least one strain sensing unit is disposed on an end face of vibration-absorbing rubber of the bushing and is configured to measure shape change information of the vibration-absorbing rubber, the vibration-absorbing rubber is disposed between the inner ring of the bushing and the outer ring of the bushing, and the relative rotation information is determined based on the shape change information of the vibration-absorbing rubber.

14. A measurement method, used to measure a height of a suspension system disposed between a bearing structure and a wheel of a vehicle, wherein the suspension system comprises a vibration absorber, a swing arm, and a bushing, the swing arm is disposed between the bearing structure and the wheel, the vibration absorber is disposed between the swing arm and the bearing structure, the bushing is disposed at a connection part between the swing arm and the bearing structure and/or the wheel, the bushing comprises an inner ring of the bushing and an outer ring of the bushing, and the measurement method comprises:
obtaining relative rotation information between the inner ring of the bushing and the outer ring of the bushing; and
determining first indication information based on the relative rotation information, wherein the first indication information indicates the height of the suspension system.

15. The measurement method according to claim 14, wherein obtaining the relative rotation information between the inner ring of the bushing and the outer ring of the bushing comprises:
obtaining, by a magnetic field direction sensing unit, change information of a magnetic field direction at a first position, wherein the magnetic field direction sensing unit is disposed on a first part of the bushing, a magnetic field at the first position is generated by a magnetic element disposed on a second part of the bushing, the first part of the bushing is one of the inner ring of the bushing or the outer ring of the bushing, the second part of the bushing is the other one of the inner ring of the bushing or the outer ring of the bushing, and the relative rotation information comprises the change information of the magnetic field direction.

16. The measurement method according to claim 15, wherein the magnetic field direction sensing unit and the magnetic element are disposed opposite to each other in an axial direction of the bushing, and a magnetization direction of the magnetic element is perpendicular to the axial direction of the bushing.

17. The measurement method according to claim 15 or 16, wherein in the axial direction of the bushing, a projection area of the magnetic element is greater than a projection area of the magnetic field direction sensing unit, and a ratio of the projection area of the magnetic element to the projection area of the magnetic field direction sensing unit is greater than or equal to a first threshold.

18. The measurement method according to any one of claims 15 to 17, wherein that the magnetic field direction sensing unit is disposed on the first part of the bushing comprises: the magnetic field direction sensing unit is fastened to a housing connected to the outer ring of the bushing.

19. The measurement method according to claim 15, wherein the first position comprises a plurality of positions, and obtaining, by the magnetic field direction sensing unit, the change information of the magnetic field direction at the first position comprises:
obtaining, by at least one pair of magnetic field direction sensing units, change information of magnetic field directions at the plurality of positions, wherein
the at least one pair of magnetic field direction sensing units is disposed on a first end face of the first part of the bushing and evenly distributed in a circumferential direction, magnetic fields at the plurality of positions are generated by at least one pair of magnetic elements that is disposed on a first end face of the second part of the bushing and evenly distributed in a circumferential direction, and the at least one pair of magnetic field direction sensing units is in a one-to-one correspondence with the at least one pair of magnetic elements.

20. The measurement method according to claim 19, wherein the at least one pair of magnetic field direction sensing units comprises a first magnetic field direction sensing unit pair, sensing directions of two magnetic field direction sensing units in the first magnetic field direction sensing unit pair are the same, the at least one pair of magnetic elements comprises a first magnetic element pair, a first magnetic pole of a magnetic element in the first magnetic element pair points to an axis of the bushing, and an included angle between a magnetization direction of the magnetic element in the first magnetic element pair and the sensing direction of the magnetic field direction sensing unit in the first magnetic field direction sensing unit pair is greater than or equal to a second threshold.

21. The measurement method according to claim 20, wherein
a difference between a first distance and a second distance is less than a third threshold, and the first distance and the second distance are respectively distances between the axis of the bushing and the two magnetic field direction sensing units in the first magnetic field direction sensing unit pair; and/or
a difference between a third distance and a fourth distance is less than a fourth threshold, and the third distance and the fourth distance are respectively distances between the axis of the bushing and two magnetic elements in the first magnetic element pair.

22. The measurement method according to any one of claims 15 to 21, wherein the magnetic field direction sensing unit comprises a magneto-resistance sensor or a plurality of magnetic induction coils.

23. The measurement method according to any one of claims 15 to 22, wherein a magnetic field strength at the first position is greater than or equal to a fifth threshold.

24. The measurement method according to claim 14, wherein obtaining the relative rotation information between the inner ring of the bushing and the outer ring of the bushing comprises:
obtaining, by at least one strain sensing unit, shape change information of vibration-absorbing rubber, wherein the vibration-absorbing rubber is disposed between the outer ring of the bushing and the inner ring of the bushing, and the at least one strain sensing unit is disposed on an end face of the vibration-absorbing rubber; and
determining the relative rotation information between the inner ring of the bushing and the outer ring of the bushing based on the shape change information of the vibration-absorbing rubber.

25. A measurement apparatus, comprising:
a memory, configured to store a computer program; and
a processor, configured to execute the computer program stored in the memory, to enable the apparatus to perform the measurement method according to any one of claims 14 to 24.

26. A system, comprising a suspension system and the measurement apparatus according to any one of claims 1 to 13 or the measurement apparatus according to claim 25.

27. A vehicle, comprising wheels, a bearing structure, a suspension system, and the measurement apparatus according to any one of claims 1 to 13, or the measurement apparatus according to claim 25.

28. A computer-readable storage medium, wherein the computer-readable storage medium stores instructions, and when the instructions are executed by a processor, the processor is enabled to implement the method according to any one of claims 14 to 24.

29. A computer program product, wherein the computer program product comprises computer program code, and when the computer program code is run on a computer, the computer is enabled to perform the method according to any one of claims 14 to 24.
